# EUROPÄISCHE PATENTSCHRIFT

(11) **EP 2 987 996 B1**
(45) Veröffentlichungstag und Bekanntmachung des Hinweises auf die Patenterteilung: **10.10.2018**
(21) Anmeldenummer: 15180679.1
(22) Anmeldetag: 12.08.2015
(51) Int. Cl.: B01D 35/16, F16K 31/06, G01M 3/28, F02M 37/22

(54) **ABLASSEINRICHTUNG**
DRAIN DEVICE
ROBINET DE VIDANGE

(30) Priorität: 19.08.2014 DE 102014216409
(43) Veröffentlichungstag der Anmeldung: 24.02.2016
(73) Patentinhaber: Mahle International GmbH, 70376 Stuttgart (DE)
(72) Erfinder: Braunheim, Michael, 73035 Göppingen (DE)
(74) Vertreter: BRP Renaud & Partner mbB Rechtsanwälte Patentanwälte Steuerberater

(56) Entgegenhaltungen:
- WO-A1-2011/041659
- DE-A1-102004 046 887
- DE-A1-102006 041 212

## Beschreibung

Die vorliegende Erfindung betrifft eine Ablasseinrichtung, insbesondere für eine Filtereinrichtung einer Brennkraftmaschine, gemäß dem Oberbegriff des Anspruchs 1. Die Erfindung betrifft außerdem eine Filtereinrichtung für eine Brennkraftmaschine mit einer derartigen Ablasseinrichtung sowie ein Verfahren zur Erfassung einer möglichen Leckage bei einer solchen Ablasseinrichtung.

Aus der DE 202 17 601 U1 ist eine gattungsgemäße Ablasseinrichtung mit einem Gehäuse und einem Magnetventil bekannt. Hinter dem ersten Magnetventil ist dabei ein zweites Magnetventil angeordnet, wobei beide Magnetventile jeweils mittels eines beweglichen Ventilkörpers eine zugehörige Durchlassöffnung sperren können. Mit den beiden hintereinander geschalteten Magnetventilen soll insbesondere ein Ablassen von abgeschiedener Flüssigkeit gegen einen Differenzdruck ermöglicht werden.

Aus der WO 2011/022659 A2 ist eine Filtereinrichtung mit einer Ablasseinrichtung bekannt.

Aus der DE 10 2006 041 212 A1 und der DE 10 2004 046 887 A1 sind Ablasseinrichtungen bekannt, beispielsweise für eine Filtereinrichtung.

Aus der WO 2011/041659 A1 ist eine Ablasseinrichtung mit einem Ventil und einem dazu in Reihe geschalteten zweiten Ventil bekannt. Zwischen den beiden Ventilen ist dabei ein Drucksensor angeordnet. Das zweite Ventil ist als ein steuerbares Ventil ausgebildet.

Bei modernen Kraftstoffmodulen wird für einen reibungsfreien Betrieb das abgeschiedene Wasser zunächst in einem Wassersammelraum des Kraftstoffmoduls bzw. Kraftstofffilters, gesammelt und zumeist über einen zusätzlichen Adsorptionsfilter, beispielsweise einen Aktivkohlefilter, in die Umwelt abgelassen. Da das Ablassen des abgeschiedenen Wassers einen für die Umwelt höchst relevanten Vorgang darstellt, werden aktuell immer zwei Magnetventile in Reihe geschaltet, um gewährleisten zu können, dass bei Ausfall eines Magnetventils kein Kraftstoff in unbeabsichtigter Weise in die Umwelt abgelassen wird.
Nachteilig bei bekannten Ablasseinrichtungen bzw. Filtereinrichtungen mit zwei hintereinander geschalteten Magnetventilen ist jedoch deren vergleichsweise aufwändige und damit auch teure Bauweise.
Die vorliegende Erfindung beschäftigt sich daher mit dem Problem, für einen Ablasseinrichtung der gattungsgemäßen Art eine verbesserte oder zumindest alternative Ausführungsform anzugeben, welche insbesondere die aus dem Stand der Technik bekannten Nachteile überwindet.
Dieses Problem wird erfindungsgemäß durch die Gegenstände der unabhängigen Ansprüche gelöst. Eine vorteilhafte Ausführungsform ist Gegenstand des abhängigen Anspruchs.

Die vorliegende Erfindung beruht auf dem allgemeinen Gedanken, bei einer Ablasseinrichtung, insbesondere für eine Filtereinrichtung einer Brennkraftmaschine, nicht wie bisher aus dem Stand der Technik bekannt, zwei Magnetventile hintereinander in Reihe zu schalten, sondern lediglich noch ein einziges Magnetventil vorzusehen, zu dem stromab ein Rückschlagventil angeordnet ist. Zwischen dem Magnetventil und dem Rückschlagventil ist dabei ein Drucksensor vorgesehen, der zur Druckerfassung in einem zwischen dem Magnetventil und dem Rückschlagventil gelegenen Raum ausgebildet ist. Idee bei der erfindungsgemäßen Ablasseinrichtung ist es somit, ein Magnetventil mittels Drucksensor auf seinen ordnungsgemäßen Betrieb bzw. seine ordnungsgemäße Funktion hin zu überwachen. Der Sensor sitzt dabei auf der drucklosen Seite, d.h. stromab des Magnetventils, wobei das Magnetventil und der Drucksensor getrennt ausgeführt sein können. Bei einer derart getrennten Ausführung kann der Drucksensor an einer beliebigen Stelle zwischen dem Magnetventil und dem Rückschlagventil angeordnet oder aber auch in eine Ablassleitung zwischen den beiden Ventilen integriert sein. Sofern die Ablasseinrichtung als Einheit ausgebildet ist, bietet es erhebliche Vereinfachungen beim Einbau, der Wartung und einem möglichen Austausch. Anstelle des bisher vergleichsweise teuren zweiten Magnetventils kann nun ein kostengünstiges und konstruktiv einfaches Rückschlagventil eingesetzt werden, wobei die Dichtheit des Magnetventils mittels des Drucksensors ermittelt wird. Zwischen dem Rückschlagventil und dem Magnetventil baut sich nämlich während des Ablassvorgangs ein gewisser Druck auf, der mit dem Drucksensor detektiert werden kann. Beim Schließen des Magnetventils baut sich der aufgebaute Druck normalerweise aufgrund einer ventilspezifischen Leckage am Ventilsitz des Rückschlagventils ab, so dass nach dem Schließen des Magnetventils mittels des Drucksensors und einem detektierten Druckabfall darauf geschlossen werden kann, dass das Magnetventil zuverlässig schließt. Detektiert der Drucksensor keinen Druckabfall, so ist davon auszugehen, dass die am Magnetventil auftretende Leckage im Wesentlichen der Rückschlagventil spezifischen Leckage entspricht, woraus geschlossen werden kann, dass das Magnetventil nicht zuverlässig dicht schließt. Ist sogar ein Druckanstieg zu verzeichnen, so kann daraus geschlossen werden, dass die Leckage am Magnetventil größer ist als am Rückschlagventil und dadurch das Magnetventil eindeutig undicht ist.

Zweckmäßig ist eine Steuerungseinrichtung zum Öffnen und Schließen des Magnetventils vorgesehen. Eine derartige Steuerungseinrichtung kann das Magnetventil beispielsweise periodisch öffnen, insbesondere sofern dieses einen Wassersammelraum eines Kraftstofffilters nach unten verschließt. Um Korrosion in einer Brennkraftmaschine vermeiden zu können, wird der stets im Kraftstoff vorhandene Wasseranteil möglichst vollständig abgeschieden, was in dem zuvor beschriebenen Kraftstofffilter beispielsweise mittels eines sogenannten Koaleszers oder eines Wasserabscheiders erfolgt. Das abgeschiedene Wasser sammelt sich dabei üblicherweise unterhalb des Filterelements in einem Wassersammelraum und wird von diesem periodisch in die Umgebung abgelassen. Ein Ablassen erfolgt dabei selbstverständlich üblicherweise nicht direkt, sondern über ein Adsorptionsfilter, beispielsweise ein Aktivkohlefilter, in welchem noch im abgeschiedenen Wasser vorhandene Kohlenwasserstoffanteile adsorbiert werden können. Das periodische Öffnen und Schließen des Magnetventils und damit das periodische Entleeren des Wassersammelraums erfolgt dabei mittels der Steuerungseinrichtung, wobei ein Signal zum Öffnen des Magnetventils beispielsweise von einem Wasserstandsensor im Wassersammelraum erzeugt werden kann.

Erfindungsgemäß ist eine Leckagedetektionseinrichtung vorgesehen, die mit dem Drucksensor verbunden und zur Auswertung dessen Signale ausgebildet ist. Mittels der Leckagedetektionseinrichtung ist es möglich, das zwischen dem Magnetventil und dem Rückschlagventil herrschende Druckniveau nach dem Öffnen und Schließen des Magnetventils zu erfassen und hierüber-wie oben beschrieben - die zuverlässige Funktion des Magnetventils zu überprüfen. Stellt die Leckagedetektionseinrichtung dabei beispielsweise keinen Druckabfall fest, so ist von einer Undichtigkeit des Magnetventils auszugehen und die Leckagedetektionseinrichtung erzeugt eine Fehlermeldung bzw. ein Warnsignal.

Die vorliegende Erfindung beruht weiter auf dem allgemeinen Gedanken, ein Verfahren zur Erfassung einer möglichen Leckage einer Ablasseinrichtung anzugeben, bei welchem das Magnetventil zunächst zumindest teilweise geöffnet wird. Öffnet das Magnetventil, wird ein Druckanstieg durch den Drucksensor ermittelt, wobei die Motorsteuerung bzw. die Leckagedetektionseinrichtung bei den Signalen "Magnetventil offen" und "Druckanstieg" keine Fehler- oder Warnmeldung erzeugt. Anschließend wird das Magnetventil geschlossen, wobei sich nach dem Schließen des Magnetventils der Druck zwischen dem Magnetventil und dem Rückschlagventil aufgrund von Mikroleckagen am Ventilsitz des Rückschlagventils langsam abbaut. Vorteilhaft ist, wenn dabei der Raum zwischen dem Magnetventil und dem Rückschlagventil vergleichsweise klein ist, die Wandungen ideal steif sind und es keine Räume gibt, in denen Luftblasen zurückbleiben können. Der Raum wäre somit vollständig mit Flüssigkeit gefüllt, wobei ein geringer Anstieg bzw. ein geringer Abfall der im Raum vorhandenen Flüssigkeitsmenge unmittelbar einen zugehörigen Druckanstieg bzw. Druckabfall bewirkt. Die Leckage in ml/min, die zum Abbau des Drucks zwischen dem Magnetventil und dem Rückschlagventil in einer Zeitspanne t erforderlich ist, definiert dabei die untere Grenze der Leckagedetektion in ml/min. Größere Leckagen am Magnet führen dabei zu einem Druckanstieg im Raum zwischen dem Magnetventil und dem Rückschlagventil und deuten dabei auf eine Undichtigkeit des Magnetventils hin. Wird weder ein Druckabfall noch ein Druckanstieg gemessen, kann davon ausgegangen werden, dass die Leckage am Rückschlagventil derjenigen am Magnetventil entspricht, so dass die Flüssigkeitsmenge im Raum im Wesentlichen konstant bleibt. Dabei wird nicht kontinuierlich gemessen, sondern lediglich nach der vordefinierten Zeitspanne t, welche beispielsweise von 0 bis 60s betragen kann.
Durch die erfindungsgemäße Ablasseinrichtung, die erfindungsgemäße Filtereinrichtung und das erfindungsgemäße Verfahren kann somit die Schließfunktion des Magnetventils mittels des Drucksensors vereinfacht überwacht werden und erübrigt dadurch den bisher erforderlichen Doppelventilaufbau, um zu gewährleisten, dass das Magnetventil ordnungsgemäß schließt und kein Kraftstoff unbeabsichtigt in die Umgebung austreten kann. Mit der erfindungsgemäßen Ablasseinrichtung wird somit der gesamte Ventilaufbau günstiger bei gleichbleibender Sicherheit.

Weitere wichtige Merkmale und Vorteile der Erfindung ergeben sich aus dem Unteranspruch, aus der Zeichnung und aus der zugehörigen Figurenbeschreibung anhand der Zeichnung.

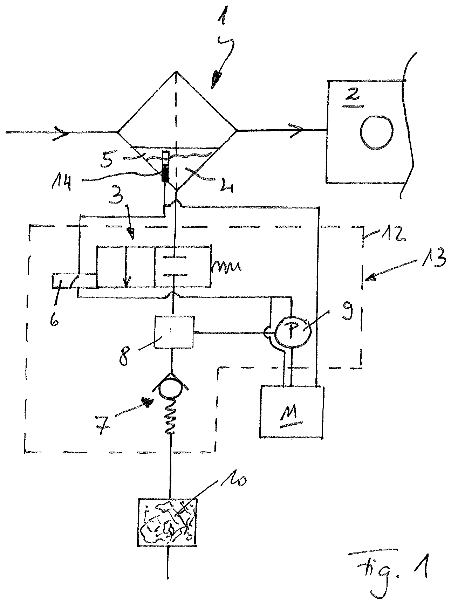

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, wie in den beigefügten Ansprüchen definiert. Ein bevorzugtes Ausführungsbeispiel der Erfindung ist in der Zeichnung dargestellt und wird in der nachfolgenden Beschreibung näher erläutert.
Die einzige Fig. 1 zeigt einen schematischen Aufbau einer erfindungsgemäßen Filtereinrichtung mit einer erfindungsgemäßen Ablasseinrichtung.
Entsprechend der Fig. 1 weist eine erfindungsgemäße Filtereinrichtung 1, welche beispielsweise als Kraftstofffilter, als Ölfilter oder als Wasserabscheidefilter für eine Brennkraftmaschine 2 ausgebildet sein kann, ein Magnetventil 3 auf, mittels welchem beispielsweise abgeschiedenes Wasser 4 aus einem Wassersammelraum 5 der Filtereinrichtung 1 bedarfsgerecht abgelassen werden kann. Zum Öffnen und Schließend des Magnetventils 3 ist dabei eine Steuerungseinrichtung 6 vorgesehen, die zum Öffnen/Schließen beispielsweise ein entsprechendes Signal eines Wasserstandsensor 14 erhält. Ein ähnlicher Wasserstandsensor könnte selbstverständlich auch im Bereich einer Ablasseinrichtung 13, insbesondere im Bereich eines Raums 8 vorgesehen sein. Stromab des Magnetventils 3 ist ein Rückschlagventil 7 angeordnet, wobei das Rückschlagventil 7 und das Magnetventil 3 über den Raum 8 kommunizierend miteinander verbunden sind. Ebenfalls vorgesehen ist ein Drucksensor 9, welcher zur Druckerfassung in dem zwischen dem Magnetventil 3 und dem Rückschlagventil 7 gelegenen Raum 8 ausgebildet ist. Stromab des Rückschlagventils 7 kann darüber hinaus ein Adsorptionsfilter 10, beispielsweise ein Aktivkohlefilter, vorgesehen sein, in welchem noch im abgeschiedenen Wasser vorhandene Kohlenwasserstoffanteile abgeschieden werden. Mit dem Drucksensor 9 verbunden ist eine Leckagedetektionseinrichtung 11, die zudem auch zur Auswertung der vom Drucksensor 9 erzeugten Signale ausgebildet ist.

Stromab des Magnetventils 3 ist ein Rückschlagventil 7 angeordnet, wobei zwischen dem Magnetventil 3 und dem Rückschlagventil 7 ein Raum 8 mit einem Drucksensor 9 vorgesehen ist, wobei der Drucksensor 9 zur Druckerfassung in dem Raum 8 ausgebildet ist. Stromab des Rückschlagventils 7 kann beispielsweise noch ein Adsorptionsfilter 10, insbesondere ein Aktivkohlefilter, angeordnet sein. Ebenfalls vorgesehen ist eine Leckagedetektionseinrichtung 11, die mit dem Drucksensor 9 verbunden und zur Auswertung dessen Signale ausgebildet ist. Die Leckagedetektionseinrichtung 11 kann auch mit dem Drucksensor 9 und der Steuerungseinrichtung 6 zum Öffnen und Schließen des Magnetventils verbunden sein. Das Magnetventil 3, der Raum 8 sowie der Drucksensor 9 und das Rückschlagventil 7 können dabei in einem Gehäuse 12 der separat zur Filtereinrichtung 1 angeordneten Ablasseinrichtung 13 angeordnet sein.

Die erfindungsgemäße Ablasseinrichtung 13 bzw. die erfindungsgemäße Filtereinrichtung 1 funktioniert dabei wie folgt:
Zunächst wird das Magnetventil 3 aufgrund eines entsprechenden Signals des Wasserstandsensors 14 zumindest teilweise geöffnet und damit Wasser 4 aus dem Wassersammelraum 5 in den Raum 8 abgelassen. Ein Öffnen des Magnetventils 3 über die Steuereinrichtung 6 erfolgt dabei ausschließlich, sofern der Wasserstandsensor 14 im Wassersammelraum 5 einen genügend hohen Wasserstand und damit eine genügend große vorhandene Wassermenge meldet. Der Wasserstandsensor 14 ist dabei üblicherweise als sogenannter 2-Level-Sensor ausgebildet, der bei Erreichen des oberen Levels ein Öffnungssignal und bei Absinken des Wasserstandes auf das untere Levels ein Schließsignal an die Steuereinrichtung 6 übermittelt. Hierdurch kann verhindert werden, dass unbeabsichtigt das falsche Fluid, beispielsweise Kraftstoff, abgelassen wird. Nachdem in diesem Fall das Rückschlagventil 7 noch sperrt, kommt es im Raum 8 zu einem Druckanstieg, was von dem Drucksensor 9 erfasst wird. Wird ein derartiger Druckanstieg detektiert, so erzeugt die mit dem Drucksensor 9 verbundene Leckagedetektionseinrichtung 11 keine Fehlermeldung, sofern gleichzeitig das Magnetventil 3 geöffnet ist. Wird hingegen kein Druckanstieg erfasst, erfolgt eine solche Fehlermeldung. Anschließend wird das Magnetventil 3 geschlossen und nach dem Schließen des Magnetventils 3 eine Druckänderung im Raum 8 vom Drucksensor 9 erfasst. Innerhalb einer vorgegebenen Zeitspanne t wird dabei bei einem Druckanstieg oder bei einem gleichbleibenden Druck im Raum 8 eine Fehlermeldung erzeugt, da in diesem Fall davon auszugehen ist, dass das Magnetventil 3 nicht mehr zuverlässig und vollständig schließt. Lediglich bei einem Druckabfall, der durch eine rückschlagventilspezifische Soll-Leckage verursacht wird, wird keine Fehlermeldung erzeugt. Die vorgegebene Zeitspanne t beträgt dabei ca. 0s bis 60s.

Vorteilhaft ist dabei, wenn der Raum 8 zwischen dem Magnetventil 3 und dem Rückschlagventil 7 klein ist, die Wandung ideal steif sind und es keine Räume gibt, in denen Luftblasen zurückbleiben können. Die Leckage in ml/min, die zum Abbau des Drucks zwischen dem Magnetventil 3 und dem Rückschlagventil 7 innerhalb der Zeitspanne t erforderlich ist, definiert dabei die untere Grenze der Leckagedetektion in ml/min. Größere Leckagen am Magnetventil 3 führen dabei zu einem Druckanstieg im Raum 8 und weisen somit ebenfalls auf eine Funktionsstörung am Magnetventil 3 hin. Liegt nach dem Schließen des Magnetventils 3 plus der vorgegebenen Zeitspanne t am Drucksensor 9 immer noch ein Druck in der Größenordnung des Öffnungsdrucks des Rückschlagventils 7 an, ist dies ein Hinweis auf eine Leckage, wobei die Leckagedetektionseinrichtung 11, die beispielsweise Teil einer Motorsteuerung sein kann, die vom Drucksensor 9 übermittelten Signale wie folgt verarbeitet:
Ist das Magnetventil 3 geschlossen, die Zeitspanne t vorüber und liegt kein Druck am Drucksensor 9, so ist dies in Ordnung. Ist jedoch das Magnetventil 3 geschlossen und liegt nach der Zeitspanne t immer noch ein Druck am Drucksensor 9 an, so lässt dies auf eine Leckage am Magnetventil 3 schließen, wobei die Leckagedetektionseinrichtung 11 eine Fehlermeldung erzeugt.

Währender Zeitspanne t wird nicht gemessen, wobei bei sehr genauer Messgenauigkeit und Signalverarbeitung ein Druckabfall bereits mit einem Solldruckabfall verglichen werden kann. Nach der Zeitspanne t kann gemessen werden, wobei selbstverständlich auch eine kontinuierliche Überwachung des Drucks möglich ist, wobei in diesem Fall die Messintervalle noch festzulegen sind. Beispielsweise können derartige Messintervalle 0 bis 60s sein.

Mit der erfindungsgemäßen Filtereinrichtung 1 bzw. der erfindungsgemäßen Ablasseinrichtung 13 und dem zugehörigen Verfahren kann die Funktionsfähigkeit bzw. die Schließfunktion des Magnetventils 3 mittels des Drucksensors 9 vereinfacht überwacht werden, wobei insbesondere auf den bisher erforderlichen Doppelventilaufbau verzichtet werden kann. Hierdurch wird der gesamte Ventilaufbau günstiger bei trotzdem gleichbleibender Sicherheit.

## Patentansprüche

1. Ablasseinrichtung (13), insbesondere für eine Filtereinrichtung (1) einer Brennkraftmaschine (2), mit einem Gehäuse (12) und einem Magnetventil (3), **dadurch gekennzeichnet, dass**
- stromab des Magnetventils (3) ein Rückschlagventil (7) angeordnet ist,
- zwischen dem Magnetventil (3) und dem Rückschlagventil (7) ein Drucksensor (9) angeordnet ist, der zur Druckerfassung in einem zwischen dem Magnetventil (3) und dem Rückschlagventil (7) gelegenen Raum (8) ausgebildet ist,
- eine Leckagedetektionseinrichtung (11) vorgesehen ist, die mit dem Drucksensor (9) verbunden und zur Auswertung dessen Signale ausgebildet ist,
- die Leckagedetektionseinrichtung (11) mit dem Drucksensor (9) und einer Steuerungseinrichtung (6) zum Öffnen und Schließen des Magnetventils (3) verbunden ist,
die Ablasseinrichtung (13) derart ausgebildet ist, dass sie eine mögliche Leckage wie folgt erfasst,
- das Magnetventil (3) wird zumindest teilweise geöffnet,
- nach dem Öffnen des Magnetventils (3) wird ein Druck im zwischen diesem und dem Rückschlagventil (7) liegenden Raum (8) erfasst,
- die Leckagedetektionseinrichtung (11) erzeugt eine Fehlermeldung, sofern der Drucksensor (9) keinen Druckanstieg erfasst,
- das Magnetventil (3) wird geschlossen,
- nach dem Schließen des Magnetventils (3) wird eine Druckänderung in dem Raum (8) vom Drucksensor (9) erfasst,
- innerhalb einer vorgegebenen Zeitspanne t wird bei einem Druckanstieg oder einem gleichbleibenden Druck im Raum (8) eine Fehlermeldung erzeugt, wogegen bei einem Druckabfall, der durch eine Rückschlagventil spezifische Soll-Leckage verursacht wird, keine Fehlermeldung erzeugt wird.

2. Filtereinrichtung (1) für eine Brennkraftmaschine (2), insbesondere ein Ölfilter, ein Kraftstofffilter oder ein Wasserabscheidungsfilter, mit einer Ablasseinrichtung (13) nach Anspruch 1.

3. Erfassungsverfahren einer möglichen Leckage einer Ablasseinrichtung (13) nach Anspruch 1 und/oder einer Filtereinrichtung (1) nach Anspruch 2, bei dem
- das Magnetventil (3) zumindest teilweise geöffnet wird,
- nach dem Öffnen des Magnetventils (3) ein Druck im zwischen diesem und dem Rückschlagventil (7) liegenden Raum (8) erfasst wird,
- die Leckagedetektionseinrichtung (11) eine Fehlermeldung erzeugt, sofern der Drucksensor (9) keinen Druckanstieg erfasst,
- das Magnetventil (3) geschlossen wird,
- nach dem Schließen des Magnetventils (3) eine Druckänderung in dem Raum (8) vom Drucksensor (9) erfasst wird,
- innerhalb einer vorgegebenen Zeitspanne t bei einem Druckanstieg oder einem gleichbleibenden Druck im Raum (8) eine Fehlermeldung erzeugt wird, wogegen bei einem Druckabfall, der durch eine Rückschlagventil spezifische Soll-Leckage verursacht wird, keine Fehlermeldung erzeugt wird.

## Claims

1. Drainage device (13), in particular for a filter device (1) of an internal combustion engine (2), with a housing (12) and a magnetic valve (3),
**characterised in that**
- a non-return valve (7) is arranged downstream of the magnetic valve (3),
- arranged between the magnetic valve (3) and the non-return valve (7) is a pressure sensor (9) designed to record the pressure in a space (8) located between the magnetic valve (3) and the non-return valve (7),
- a leak detection device (11) is provided which is connected to the pressure sensor (9) and is designed to evaluate its signals,
- the leak detection device (11) is connected to the pressure sensor (9) and a control device (6) for opening and closing the magnetic valve (3),
the drainage device (13) is designed so that a possible leak is detected as follows,
- the magnetic valve (3) is at least partially opened,
- after opening of the magnetic valve (3) a pressure is recorded in the space (8) located between said magnetic valve and the non-return valve (7),
- the leak detection device (11) produces an error message if the pressure sensor (9) does not record an increase in pressure,
- the magnetic valve (3) is closed,
- after closing of the magnetic valve (3) a change in pressure in the space (8) is recorded by the pressure sensor (9),
- within a predetermined time interval t, in the case of the pressure increasing or remaining constant in the space (8) an error message is produced, whereas, in the case of a decrease in pressure caused by a non-return valve-specific nominal leak, no error message is produced.

2. Filter device (1) for an internal combustion engine (2), in particular an oil filter, a fuel filter or a water separation filter, with a drainage device (13) according to claim 1.

3. Method of detecting a possible leak of a drainage device (13) according to claim 1 and/or a filter device (1) according to claim 2, in which
- the magnetic valve (3) is at least partially opened,
- after opening of the magnetic valve (3) a pressure is recorded in the space (8) located between said magnetic valve and the non-return valve (7),
- the leak detection device (11) produces an error message if the pressure sensor (9) does not record an increase in pressure,
- the magnetic valve (3) is closed,
- after closing of the magnetic valve (3) a change in pressure in the space (8) is recorded by the pressure sensor (9),
- within a predetermined time interval t, in the case of the pressure increasing or remaining constant in the space (8) an error message is produced, whereas, in the case of a decrease in pressure caused by a non-return valve-specific nominal leak, no error message is produced.

## Revendications

1. Robinet de vidange (13), en particulier pour un dispositif de filtre (1) d'un moteur à combustion interne (2), avec un boîtier (12) et une électrovanne (3), **caractérisé en ce que**
- un clapet anti-retour (7) est disposé en aval de l'électrovanne (3),
- un capteur de pression (9), qui est réalisé pour la détection de la pression dans un espace (8) situé entre l'électrovanne (3) et le clapet anti-retour (7), est disposé entre l'électrovanne (3) et le clapet anti-retour (7),
- un dispositif de détection de fuite (11) est prévu, qui est relié au capteur de pression (9) et est réalisé pour l'évaluation de ses signaux,
- le dispositif de détection de fuite (11) est relié au capteur de pression (9) et à un dispositif de commande (6) pour l'ouverture et la fermeture de l'électrovanne (3),
le robinet de vidange (13) est réalisé de telle sorte qu'il détecte une possible fuite comme suit,
- l'électrovanne (3) est ouverte au moins en partie,
- après l'ouverture de l'électrovanne (3), une pression est détectée dans l'espace (8) situé entre celle-ci et le clapet anti-retour (7),
- le dispositif de détection de fuite (11) génère un message d'erreur, dans la mesure où le capteur de pression (9) ne détecte pas de hausse de pression,
- l'électrovanne (3) est fermée,
- après la fermeture de l'électrovanne (3), un changement de pression dans l'espace (8) est détecté par le capteur de pression (9),
- dans un intervalle de temps t prédéfini, dans le cas d'une hausse de pression ou d'une pression constante dans l'espace (8), un message d'erreur est généré, par contre en cas de chute de pression, qui est provoquée par une fuite de consigne spécifique au clapet anti-retour, aucun message d'erreur n'est généré.

2. Dispositif de filtre (1) pour un moteur à combustion interne (2), en particulier un filtre à huile, un filtre à carburant ou un filtre de séparation d'eau, avec un robinet de vidange (13) selon la revendication 1.

3. Procédé de détection d'une possible fuite d'un robinet de vidange (13) selon la revendication 1 et/ou d'un dispositif de filtre (1) selon la revendication 2, où
- l'électrovanne (3) est ouverte au moins en partie,
- après l'ouverture de l'électrovanne (3), une pression est détectée dans l'espace (8) situé entre celle-ci et le clapet anti-retour (7),
- le dispositif de détection de fuite (11) génère un message d'erreur, dans la mesure où le capteur de pression (9) ne détecte pas de hausse de pression,
- l'électrovanne (3) est fermée,
- après la fermeture de l'électrovanne (3), un changement de pression dans l'espace (8) est détecté par le capteur de pression (9),
- dans un intervalle de temps t prédéfini, dans le cas d'une hausse de pression ou d'une pression constante dans l'espace (8), un message d'erreur est généré, par contre en cas de chute de pression, qui est provoquée par une fuite de consigne spécifique au clapet anti-retour, aucun message d'erreur n'est généré.
